(19) Europäisches Patentamt
European Patent Office
Office européen des brevets

(11) **EP 3 697 590 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(21) Anmeldenummer: **18765870.3**

(22) Anmeldetag: **06.09.2018**

(51) Int Cl.:
*B29B 7/90* (2006.01)    *B29C 48/285* (2019.01)
*B29C 48/29* (2019.01)    *B29C 45/18* (2006.01)
*B29B 7/42* (2006.01)    *B29C 48/45* (2019.01)
*B29C 48/67* (2019.01)    *B29K 105/08* (2006.01)
*B29K 105/12* (2006.01)

(86) Internationale Anmeldenummer:
**PCT/EP2018/073987**

(87) Internationale Veröffentlichungsnummer:
**WO 2019/076533 (25.04.2019 Gazette 2019/17)**

(54) **EINSCHNECKEN-PLASTIFIZIEREINHEIT MIT FASERZUFÜHREINRICHTUNG ZUR HERSTELLUNG EINER FASERBELADENEN KUNSTSTOFFSCHMELZE**

SINGLE SCREW PLASTICISING UNIT HAVING FIBRE SUPPLY DEVICE FOR PRODUCING A FIBRE-CONTAINING PLASTIC MELT

UNITÉ DE MALAXAGE À VIS SIMPLE COMPRENANT UN DISPOSITIF D'AMENÉE DE FIBRES POUR L'OBTENTION D'UNE MASSE PLASTIQUE FONDUE CHARGÉE DE FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2017 DE 102017123992**

(43) Veröffentlichungstag der Anmeldung:
**26.08.2020 Patentblatt 2020/35**

(73) Patentinhaber: **KraussMaffei Technologies GmbH
80997 München (DE)**

(72) Erfinder: **SCHADHAUSER, Maximilian
82008 Unterhaching (DE)**

(74) Vertreter: **Wilhelm, Ludwig
KraussMaffei Group GmbH
Krauss-Maffei-Strasse 2
80997 München (DE)**

(56) Entgegenhaltungen:
WO-A2-2011/066917    DE-A1- 4 300 269
DE-A1-102007 061 620    DE-B- 1 208 479
DE-U1-202017 100 255    US-A- 5 000 397
US-B1- 6 444 153

**Beschreibung**

Die Erfindung betrifft eine Einschnecken-Plastifiziereinheit gemäß dem Oberbegriff von Anspruch 1.

Eine derartige Einschnecken-Plastifiziereinheit ist aus dem gattungsbildenden Stand der Technik gemäß der WO 2011/066917 A2 bekannt. Aus diesem Stand der Technik ist es bekannt, eine stetige Zuführgeschwindigkeit eines Faserbündels dadurch zu erreichen, dass das Faserbündel angetrieben haltend zugeführt wird. Dazu wird das Faserbündel von einer Vorratsspule mit einem Antrieb abgezogen, welcher eine Antriebswalze und eine gegen die Antriebswalze gedrückte Gegendruckwalze aufweist, wobei das Faserbündel durch den Walzenspalt zwischen den beiden Walzen geführt wird. Durch den Druck der Gegendruckwalze wird das Faserbündel festgehalten, d.h. es kann nicht schneller abgezogen werden als dies die Umlaufgeschwindigkeit der Antriebswalze zulässt, selbst wenn die Schneckenwelle, um die das endlose Faserbündel gewickelt ist, mit einer höheren Umfangsgeschwindigkeit umläuft.

Die Kraft, die von der Schneckenwelle auf das Faserbündel aufgebracht wird, wird nachfolgend als Fasereinzugskraft bezeichnet. Die Gegenkraft dieser Fasereinzugskraft wird nachfolgend als Faserbremskraft bezeichnet. Der Betrag der Faserbremskraft entspricht dem der Fasereinzugskraft, die Faserbremskraft weist aber eine entgegengesetzte Orientierung auf und wird durch die oben beschriebene Walzenpaarung erzeugt. Dadurch ergibt sich eine konstante Fasereinzugsgeschwindigkeit.

Nachteilig an diesem Stand der Technik ist, dass eine hohe punktuelle Kraft auf die Faserbündel und somit die in den Faserbündeln befindlichen Fasern erzeugt wird. Das kann dazu führen, dass einzelne Fasern, sogenannte Filamente, in einem Faserbündel brechen, bevor sie in den Zylinder gelangen. Außerdem können sich Filamente auf eine oder beide Walzen aufwickeln. Dieser Effekt kann sich über die Zeit aufschaukeln und letztendlich zum Maschinenstillstand führen. Der Verlust an Fasermaterial wirkt sich zudem nachteilig auf die Qualität des Spritzgießbauteils aus. Zudem kann die Umgebung der Maschine mit Bruchfasern und Faserstaub angereichert werden. Dadurch entstehen Gefahren für das Bedienpersonal der Maschine, insbesondere eine Belastung der Atemwege und Gefahren für die Maschine, insbesondere die Gefahr von Kurzschlüssen bei der Verwendung von kohlenstoffhaltigem Fasermaterial.

Ausgehend hiervon liegt der Erfindung die Aufgabe zugrunde, eine Einschnecken-Plastifiziereinheit anzugeben, bei der die Faserzuführung in einer Art und Weise erfolgt, die eine hohe punktuelle Kraft auf die Faserbündel vermeidet. Dadurch lassen sich auch die vorgenannten Nachteile des gattungsbildenden Standes der Technik vermeiden.

Dadurch, dass die Faserzuführeinrichtung mit einem oder mehreren Schläuchen ausgestattet ist, durch welche von Faserspulen abgezogene Faserbündel hindurchführbar oder hindurchgeführt sind, und ein oder mehrere Schläuche derart verlegt sind, dass für diese Schläuche ein oder mehrere Kreissegmente mit einem jeweiligen Kreissegmentwinkel vorliegen, erfahren diejenigen Faserbündel, die in Kreissegmenten geführt sind, eine dem jeweiligen Kreissegmentwinkel entsprechende Faserbremskraft gemäß dem Euler-Eytelwein-Effekt. Für jeweils einen Schlauch ergibt sich eine Gesamt-Faserbremskraft gemäß dem Euler-Eytelwein-Effekt entsprechend der Summe der Kreissegmentwinkel, welche dieser Schlauchs aufweist. Als Kreissegmentwinkel wird nachfolgend ein Winkel verstanden, der von den Rändern des Kreissegments eingeschlossen wird.

Gemäß einer Ausführungsform kann vorgesehen sein, dass bei einem oder mehreren der Schläuche mehrere Kreissegmente mit unterschiedlich großen Kreissegmentwinkeln vorliegen.

Ferner kann vorgesehen sein, dass bei einem oder mehreren der Schläuche gerade Abschnitte vorhanden sind, in welchen die Faserbündel nicht mit einer Faserbremskraft gemäß dem Euler-Eytelwein-Effekt beaufschlagt sind.

Die Lage eines Schlauchs im Raum kann beliebig sein. Die Anzahl der Kreissegmente und deren Radien sowie die Anzahl etwaiger gerader Abschnitte können ebenfalls beliebig sein. Es kommt lediglich darauf an, dass eine gewünschte Faserbremskraft mittels des Euler-Eytelwein-Effekts erzielt wird. Diese hängt ausschließlich von der Summe der Kreissegmentwinkel ab, die zwischen der Eintrittsöffnung und der Austrittsöffnung eines Schlauchs vorliegen. In einer bevorzugten Ausführungsform können ein oder mehrere Schläuche derart verlegt sein, dass mehrere Kreissegmente mit dem gleichen Radius r unmittelbar aufeinanderfolgend und sich aneinander anschließend vorliegen und somit im Ergebnis eine Umschlingung eines imaginären oder eines realen Umschlingungsgegenstandes mit einem vorgebbaren Umschlingungswinkel β gebildet wird, wobei der Umschlingungswinkel β der Summe der Kreissegmentwinkel entspricht, die diese Umschlingung bilden. Anders ausgedrückt bedeutet dies folgendes. Die Umschlingung wird gedanklich in Kreissegmente aufgeteilt, die zusammengesetzt diese Umschlingung ergeben. Dabei können die Kreissegmente alle den gleichen Kreissegmentwinkel aufweisen oder unterschiedliche Kreissegmentwinkel. Für den Euler-Eytelwein-Effekt kommt es lediglich auf die Summe der einzelnen Kreissegmentwinkel an und somit auf den Umschlingungswinkel β.

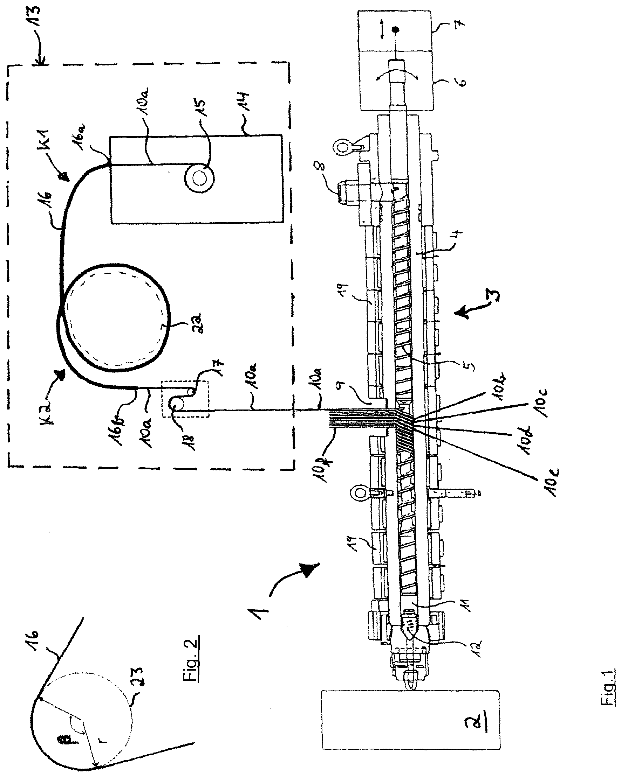

Für den Euler-Eytelwein-Effekt gilt folgende Beziehung (siehe hierzu auch Figur 2): Für das Verhältnis zwischen der am Ende eines Kreissegments vorliegenden Faserbremskraft F2 und der am beginn eines Kreissegmens vorliegenden Faserbremskraft F1 gilt:

$$F_2 \leq F_1 e^{\mu \cdot \beta}$$

wobei

- β den Umschlingungswinkel (im Bogenmaß) eines Kreissegments beschreibt.

- μ der Gleitreibungskoeffizient ist.

Wenn die Fasereinzugskraft beispielsweise 120 Newton pro Faserbündel beträgt, werden durch den Euler-Eytelwein-Effekt etwa 90-110 Newton und somit etwa 80 % der zur Kompensation der Fasereinzugskraft notwendigen Faserbremskraft erzeugt. Der Schlauch kann vorzugsweise wenigstens eine halbe Windung entsprechend einem Umschlingungswinkel von 180° bis zu einer vollständigen Windung entsprechend einem Umschlingungswinkel von 360° oder auch etwas mehr aufweisen. Ganz besonders bevorzugte Umschlingungswinkel ergeben sich durch Winkel in Grad in einem Bereich von 180° bis 540° (= 1,5 Windungen). Es können aber auch mehr Windungen vorgesehen sein, beispielsweise 2 Windungen, d.h. ein Umschlingungswinkel von 720°. Der Radius des realen oder imaginären Umschlingungsgegenstandes kann zwischen r=0,1 bis 1 m liegen, als bevorzugter Bereich kann r=0,3 bis 0,6 m benannt werden.

In Weiterbildung der Erfindung können weitere Bauteile der Faserzuführeinrichtung so ausgebildet sein, dass von diesen weiteren Bauteilen ebenfalls ein Beitrag zur Bremswirkung erzeugt wird. Insbesondere können weitere Anteile an Bremswirkung durch horizontal oder vertikal gelagerte Faserspulen und/oder durch eine geschwindigkeitsgeregelte Bremswalze erzielt werden.

Insgesamt ist die Faserzuführeinrichtung gemäß der vorliegenden Erfindung derart ausgebildet, dass die Faserbündel nicht zwischen zwei Walzen oder anderen Bauteilen geführt sind, so dass auch keine hohe punktuelle Kraft auf die Faserbündel einwirken kann. Vorzugsweise wird die auf die Faserbündel einwirkenden Bremskräfte von mehreren Bestandteilen gebildet, wobei die mit dem Euler-Eytelwein-Effekt bewirkte Faserbremskraft den größten Anteil bildet, insbesondere mehr als 50% und weitere Anteile an Faserbremskraft von den Faserspulen und der Bremswalze herrühren.

Gemäß einer bevorzugten Ausführungsform kann für jedes der Faserbündel ein eigener Schlauch vorgesehen sein.

Gemäß einer weiteren Ausführungsform kann vorgesehen sein, dass alle Schläuche derart verlegt sind, dass für diese Schläuche ein oder mehrere Kreissegmente mit einem jeweiligen Kreissegmentwinkel vorliegen. Dabei können vorzugsweise für jeden der Schläuche die gleichen Kreissegmente mit den gleichen Kreissegmentwinkeln gebildet werden.

Ferner kann gemäß einer weiteren Ausführungsform vorgesehen sein, dass alle Schläuche derart verlegt sind, dass jeweils eine Umschlingung eines imaginären oder eines realen Umschlingungsgegenstandes mit einem vorgebbaren Umschlingungswinkel (β) gebildet wird, wobei vorzugsweise für jeden der Schläuche der gleiche Umschlingungswinkel (β) vorgesehen ist.

Es kann vorteilhaft sein, wenn die Summe der Kreissegmentwinkel bzw. ein Umschlingungswinkel im Bereich von 180° bis 720° vorgesehen ist. Ein bevorzugter Radius liegt zwischen 0,1m und 1,0m, vorzugsweise zwischen 0.3 und 0.6 m.

Eine von einem Motor angetriebene Bremswalze, welche von Faserbündeln umlaufen wird, kann insbesondere der Austrittsöffnung der Schläuche nachgelagert vorgesehen sein .

Die Bremswalze kann vorzugsweise eine gummibeschichtete Oberfläche aufweisen, um die Haftreibung der Faserstränge zu erhöhen. Die Bremswalze kann in geeigneter Weise von den Fasersträngen umschlungen werden. Der Umschlingungswinkel ρ kann im Bereich von 15° bis 270° liegen. Bevorzugt ist ein Bereich von 120° bis 200° und ganz besonders bevorzugt kann der Umschlingungswinkel 180° betragen.

Die Verwendung einer geschwindigkeitsgeregelten Bremswalze hat den Vorteil, dass damit eine stetige und einstellbare, insbesondere konstante, Faserzuführgeschwindigkeit erreicht werden kann. Das System ist so eingestellt, dass von der Schneckenwelle keine Fasereinzugskraft erzeugt werden kann, die die Faserbremskraft übersteigt.

Vorzugsweise wird mit Hilfe der Umschlingung des im Schlauch geführten Faserstrangs bzw. mit dem in Kreissegmenten geführten Faserstrang aufgrund des Euler-Eytelwein-Effekts nur ungefähr 80% der Faserbremskraft aufgebracht, vorzugsweise zwischen 75% und 85%. Die übrigen ungefähr 20% werden von der Bremswalze aufgebracht, die somit auch die Endgeschwindigkeit auf den Faserstrang aufprägt. Die genaue Aufteilung der Faserbremskraft auf den Euler-Eytelwein-Effekt in dem Schlauch einerseits und auf der Bremswalze andererseits richtet sich nach den jeweiligen Gegebenheiten und kann vom Fachmann in geeigneter Weise eingestellt werden. Die Faserbremskraft mittels des Euler-Eytelwein-Effekts sollte vorzugsweise größer als 50% sein, und die Faserbremskraft durch die Bremswalze sollte vorzugsweise kleiner als 50% sein. Die Bremswalze kann vorzugsweise von einem Getriebemotor angetrieben werden. Die Geschwindigkeit, mit welcher die Bremswalze angetrieben wird, kann vorzugsweise regelbar sein.. Die von der Bremswalze erzeugte Faserbremskraft liegt vorzugsweise im Bereich von 30 bis 60 Newton und beträgt vorzugsweise ca. 20 Newton. Vorzugsweise kann mit der Bremswalze ein Anteil von etwa 20% der gesamten Faserbremskraft erzeugt werden.

In dem Fasergatter der Faserzuführeinrichtung können mehrere Faserspulen um eine horizontal oder vertikal liegende Achse drehbar gelagert angeordnet sein. Durch die Reibung des Lagers wird die Faserspule permanent so abgebremst, dass die Faserbündel mit einer geringen Vorspannkraft vorgespannt sind. In der Regel liegt der Wert der Vorspannkraft im Bereich von 5 bis 15 Newton, vorzugsweise ca. 10 Newton.

Damit die Faserbündel leicht in die Schläuche eingeführt werden können, kann an der Eintrittsöffnung von einem oder mehreren der Schläuche eine Venturidüse (20) angeordnet sein. Die Anwendung des Venturieffekts ist nur zum Anfahren erforderlich, um die Faserbündel in und durch den bzw. die Antistatikschläuche hindurch zu bekommen. Wenn die Faserbündel einmal in die Schneckengänge eingezogen sind, kann die Zufuhr von Druckluft abgeschaltet werden.

Um die Bauweise der Faserzuführeinrichtung zu vereinfachen, kann vorgesehen sein, dass mehrere Faserbündel gemeinsam über eine einzige Bremswalze und vorzugsweise auch gemeinsam über eine einzige Umlenkwalze umlaufen, wobei die Faserbündel in Achsrichtung der jeweiligen Walze gesehen in geeigneter Weise voneinander beabstandet sind. Es gibt somit nur eine einzige Bremswalze und/oder nur eine einzige Umlenkwalze, über die alle Faserbündel geführt sind.

Ein Anwendungsgebiet einer erfindungsgemäßen Einschnecken-Plastifiziereinheit kann eine Spritzgießmaschine zur Herstellung von faserverstärkten Kunststoff-Formteilen sein, mit einer Schließeinheit und einer erfindungsgemäßen Einschnecken-Plastifiziereinheit, wobei ein Linearantrieb für die Schnecke vorgesehen ist, derart, dass die Schnecke als Schubschnecke ausgebildet und zum Einspritzen von mit Fasern versetzter Kunststoff-Schmelze in ein Spritzgießwerkzeug vorgesehen ist.

Eine Spritzgießmaschine zur Herstellung von faserverstärkten Kunststoff-Formteilen kann auch mit einer erfindungsgemäßen Einschnecken-Plastifiziereinheit als Schneckenvorplastifizierung und mit einem der Plastifiziereinheit nachgeschalteten Kolben-Spritzaggregat zum Einspritzen von mit Fasern versetzter Kunststoff-Schmelze in ein Spritzgießwerkzeug ausgebildet sein. Dabei kann die Schnecke in der Schneckenvorplastifizierung gegebenenfalls auch als Schubschnecke ausgebildet sein.

Die vorliegend angegebenen Zahlenwerte bei der Beschreibung der Erfindung und von Ausführungsbeispielen sind lediglich als Richtschnur zu verstehen. Dies bedeutet insbesondere, dass auch eine etwas andere Verteilung der Faserbremskraft im Rahmen der vorliegenden Erfindung liegt. Es kommt lediglich darauf an, dass der Hauptanteil der Faserbremskraft mit dem Effekt nach Eutel-Eylerwein erzielt wird und dass auf ein Zerquetschen von Faserbündeln oder einzelnen Fasern zwischen zwei aneinander gepressten Walzen wie beim eingangs genannten Stand der Technik verzichtet werden kann. Weiterhin sind die Zahlenwerte in Bezug auf den Umschlingungswinkel lediglich als vorteilhafte Angaben zu verstehen. Dies bedeutet, dass gegebenenfalls auch andere Zahlenwerte für den Radius und/oder den Umschlingungswinkel zu einem sinnvollen Wert der Faserbremskraft mittels des Euler-Eytelwein-Effekts führen können.

Nachfolgend soll die Erfindung anhand von Ausführungsbeispielen und unter Bezugnahme auf die Figuren 1 bis 6 näher beschrieben werden. Es zeigen:

Fig. 1    Spritzgießmaschine mit einer erfindungsgemäßen Einschnecken-Plastifiziereinheit;
Fig. 2    Umschlingung an einem realen Umschlingungsgegenstand;
Fig. 3    Fasergatter
Fig. 4    Schlauch mit Venturidüse
Fig. 5    Ausführungsform mit alternierender Umschlingungsrichtung
Fig. 6    Ausführungsform mit Kreissegmenten und einer Umschlingung

Die Figur 1 zeigt die Verwendung einer erfindungsgemäßen Einschnecken-Plastifiziereinheit als Bestandteil einer Spritzgießmaschine. Die in der Figur 1 dargestellte Spritzgießmaschine 1 umfasst im Wesentlichen eine vorliegend nur schematisch angedeutete Schließeinheit 2 sowie eine erfindungsgemäße Einschnecken-Plastifiziereinheit 3. Die Schließeinheit 2 und die Einschnecken-Plastifiziereinheit 3 sind in an sich bekannter Weise auf einem hier nicht dargestellten Maschinenbett angebracht. Die Einschnecken-Plastifiziereinheit 3 umfasst einen Zylinder 4 mit einer Schnecke 5. Auf der Außenseite des Zylinders 4 sind mehrere Heizelemente 19 angebracht. Das hintere Ende der Schnecke 5 ist mit einem Drehantrieb 6 und einem Linearantrieb 7 wirkverbunden. Mittels des Linearantriebs 7 kann die Schnecke 5 in dem Zylinder 4 axial verfahren werden, d.h. die Schnecke 5 ist als Schubschnecke ausgebildet und zum Einspritzen von mit Fasern versetzter Kunststoffschmelze in ein hier nicht dargestelltes in der Schließeinheit 2 befindliches Spritzgießwerkzeug vorgesehen. Im hinteren Endbereich der Schneckengänge ist eine erste Öffnung als Einfüllöffnung 8 für die Zufuhr eines aufzuschmelzenden Kunststoffmaterials vorgesehen. Förderabseitig von der ersten Öffnung 8 ist in dem Zylinder 4 eine zweite Öffnung als Einfüllöffnung 9 für die Zufuhr eines Fasermaterials vorgesehen. Das Fasermaterial wird vorzugsweise in Form von räumlich voneinander getrennten Faserbündeln 10a - 10f in die Öffnung 9 eingeführt. Ein Faserbündel kann auch als Roving bezeichnet werden. Am vorderen Ende weist die Schnecke 5 eine Rückströmsperre 11 und förderabseitig von der Rückströmsperre 11 ein mit der Schnecke 5 drehfest verbundenes und mit dieser mitrotierendes Mischteil 12 auf. Die Figur 1 zeigt eine Situation, wie sie am Ende eines Einspritzvorgangs vorliegt. Die Schnecke 5 befindet sich in ihrer vorderen Endposition. Der konisch zulaufende Kopf des Mischteils 12 liegt auf Anschlag in einer passenden konischen Ausnehmung in dem Zylinder 4.

Die Zufuhr des Fasermaterials soll anhand des Faserbündels 10a näher beschrieben werden. Der besseren Übersicht halber ist die insgesamt mit dem Bezugszeichen 13 gekennzeichnete und nur schematisch dargestellte Faserzuführeinrichtung im Verhältnis zur Pastifiziereinheit 3 in stark vergrößertem Maßstab dargestellt. Die Faserzuführeinrichtung 13 umfasst ein Fasergatter 14 mit einer oder mehreren Faserspulen 15, von denen jeweils ein Faserbündel abgezogen werden kann. Bei dem vorliegenden Ausführungsbeispiel gemäß der Figur 1 sollen insgesamt sechs (6) Faserbündel 10a bis 10f der Schnecke 5 zugeführt werden, so dass in dem Fasergatter 14 demzufolge sechs (6) Faserspulen vorgesehen sind. Vorliegend dargestellt ist nur eine einzige Faserspule 15 für das Faserbündel 10a. Das Faserbündel 10a wird durch einen als Antistatikschlauch ausgebildeten Schlauch 16 geführt, welcher eine Eintrittsöffnung 16a und eine Austrittsöffnung 16b aufweist. Die Eintrittsöffnung 16a ist an einer geeigneten Stelle am oder in dem Fasergatter 14 angeordnet. Dem Austrittsende 16b nachgeschaltet sind eine Umlenkwalze 17 und eine Bremswalze 18.

Wenn das Faserbündel 10a so von der Schnecke 5 erfasst ist, dass durch die Rotation der Schnecke 5 das Faserbündel 10a in die Schmelze eingezogen und damit von der Faserspule 15 abgezogen wird, wirkt die Faserzuführeinrichtung 13 als Bremse, wobei sich die Bremswirkung und damit die Faserbremskraft auf die verschiedenen Bestandteile der Faserzuführeinrichtung 13 wie nachfolgend beschrieben verteilt.

Ein erster Bestandteil der Faserbremskraft wird an der Faserspulen 15 erzeugt. Die Faserspule 15 ist drehbar gelagert und wird durch die Reibung des Lagers und/oder die Reibung eines feder- bzw. gewichtbelasteten Schleifriemens (nicht dargestellt) so in ihrer Drehung gebremst, dass das Faserbündel 10a mit ca. 10 Newton vorgespannt ist.

Ein zweiter Bestandteil der Faserbremskraft wird mittels des Schlauchs 16 erzielt, wobei der Schlauch 16 derart verlegt ist, dass eine Umschlingung eines imaginären Umschlingungsgegenstandes 22 mit einem vorgebbaren Umschlingungswinkel (β) gebildet wird. Das Faserbündel 10a wird durch den als Schlauch 16 geführt, der einen geeignet großen Umschlingungswinkel β aufweist. Dies führt zu einer zweiten Bremswirkung mit einem zweiten Bestandteil der Faserbremskraft durch den Effekt der Seilreibung nach Euler-Eytelwein. Zusätzlich liegen an den mit den Bezugszeichen K1 und K2 gekennzeichneten Abschnitten des Schlauchs 16 Kreissegmente vor, in denen ebenfalls eine Faserbremskraft durch den Effekt der Seilreibung nach Euler-Eytelwein vorliegt. In geraden Abschnitten des Schlauchs wird das Faserbündel 10a nicht mit einer Faserbremskraft gemäß dem Euler-Eytelwein-Effekt beaufschlagt. Dieser zweite Bestandteil der Faserbremskraft erzeugt etwa 100 Newton der Fasereinzugskraft, so dass die Faserbremskraft am Ende des Schlauchs 16 insgesamt ca. 80% der Fasereinzugskraft beträgt. Der Schlauch 16 sollte wenigstens eine halbe Windung entsprechend einem Umschlingungswinkel von 180° bis zu einer vollständigen Windung entsprechend einem Umschlingungswinkel 360° oder auch etwas mehr aufweisen. Bevorzugte Umschlingungswinkel ergeben sich durch Winkel in Grad in einem Bereich von 180° bis 540° (= 1,5 Windungen) bei einem Radius von 0.1 bis 1 m.

Ein dritter Bestandteil der Faserbremskraft wird mittels der Bremswalze 18 erzeugt. Das Faserbündel 10a wird um eine frei drehbar gelagerte Umlenkwalze 17 und nachfolgend um eine geschwindigkeitsgeregelte Bremswalze 18 und von dort an die Schnecke 5 geführt. Der Antrieb der Bremswalze 18 erfolgt vorzugsweise mittels eines Getriebemotors. Mittels der Bremswalze 18 werden die letzten 20% der Faserbremskraft aufgebracht. Die Anordnung von Umlenkwalze 17 und Bremswalze 18 ist dergestalt, dass sowohl die Umlenkwalze 17 als auch die Bremswalze 18 jeweils mit 180° umlaufen werden.

Die vorstehend angegebenen Zahlenwerte sind lediglich als Richtschnur zu verstehen, d.h. auch eine etwas andere Verteilung der Faserbremskraft liegt im Rahmen der vorliegenden Erfindung. Es wird lediglich als vorteilhaft gesehen, wenn die Hauptbremswirkung (mehr als 50%) durch die zweite Bremswirkung gemäß dem Effekt nach Euler-Eytelwein erzielt wird.

Vorzugsweise ist für jedes der Faserbündel 10a bis 10f ein eigener Schlauch 16 vorgesehen. Die Umlenkwalze 17 und die Bremswalze 18 können so ausgestaltet sein, dass nur eine einzige Umlenkwalze 17 und nur eine einzige Bremswalze 17 vorgesehen sind, auf denen alle Faserbündel 10a bis 10f geführt werden. Dabei sollten die Faserbündel 10a bis 10f in Achsrichtung der Walzen gesehen in geeigneter Weise voneinander beabstandet sein.

Die Figur 2 zeigt, wie ein Schlauch 16 mit einem Umschlingungswinkel α um einen realen Umschlingungsgegenstand 23 verlegt ist. Auf ein in dem Schlauch 16 geführtes Faserbündel wirkt der Effekt der Seilreibung nach Euler-Eytelwein. Dieser Effekt bewirkt eine Faserbremskraft auf das Faserbündel im Bereich des Umschlingungswinkels a. Vorzugsweise kann ein Umschlingungswinkel α im Bereich von 180° bis 540° vorgesehen sein und weiter kann ein Radius im Bereich von 0.1 bis 1 m vorgesehen sein.

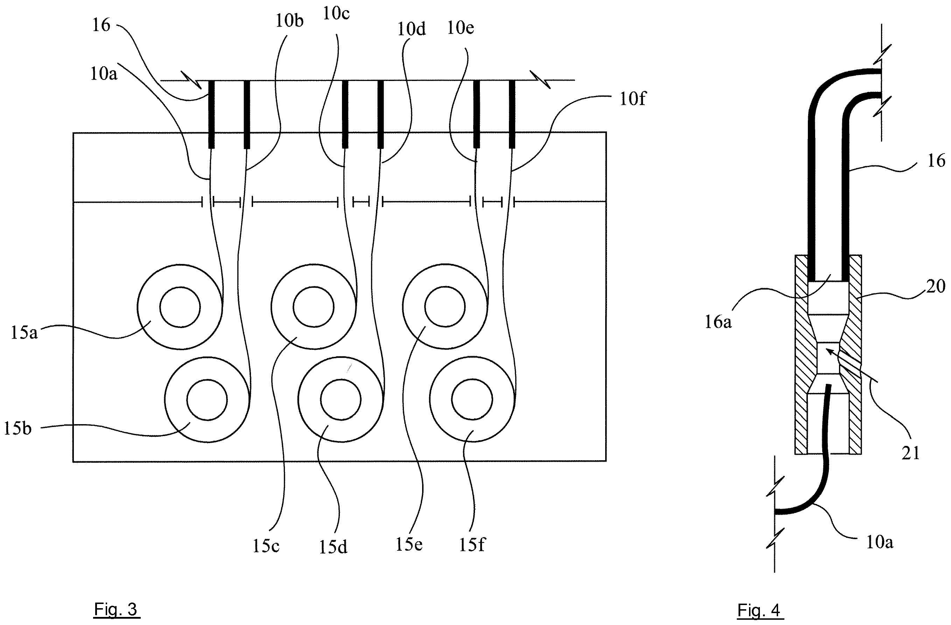

Die Figur 3 zeigt ein Fasergatter 14 mit insgesamt sechs (6) Faserspulen 15a, 15b, 15c, 15d, 15e und 15f. Von diesen können Faserbündel 10a bis 10f abgezogen werden. An jedem der Antistatikschläuche 16 ist an dessen Eintrittsöffnung 16a eine Venturidüse 20 vorgesehen (siehe Figur 4), in die Druckluft eingeleitet werden kann (siehe Pfeil 21). Jedes der Faserbündel 10a bis 10f gelangt somit über eine Venturidüse 20 in einen Schlauch 16 und von dort aus weiter zur Schnecke 5, wie dies in der Figur 1 dargestellt ist. Jedes der Faserbündel 10a bis 10f wird somit mittels Venturieffekt in einen Schlauch eingezogen. Die Anwendung des Venturieffekts ist nur zum Anfahren erforderlich, um die Faserbündel in und durch den bzw. die Antistatikschläuche hindurch zu bekommen. Wenn die Faserbündel einmal in die Schneckengänge eingezogen sind, kann die Zufuhr von Druckluft abgeschaltet werden.

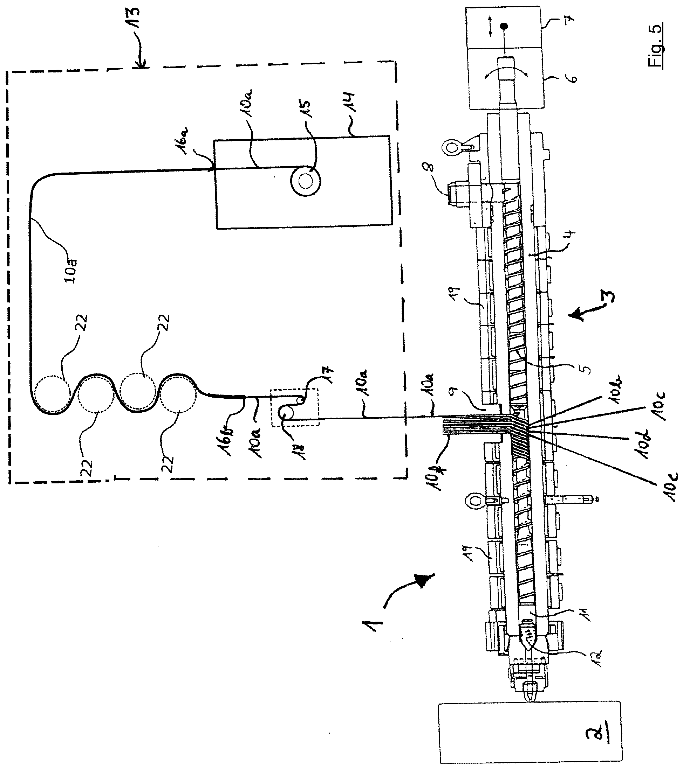

Die Figur 5 zeigt eine Ausführungsform mit alternierender Umschlingungsrichtung. Vier alternierend orientierte 180°-Umschlingungen bewirken dabei nach Euler-Eytelwein die gleiche Bremswirkung wie vier gleich orientierte 180°-Umschlingungen, die in Summe 720° ergeben.

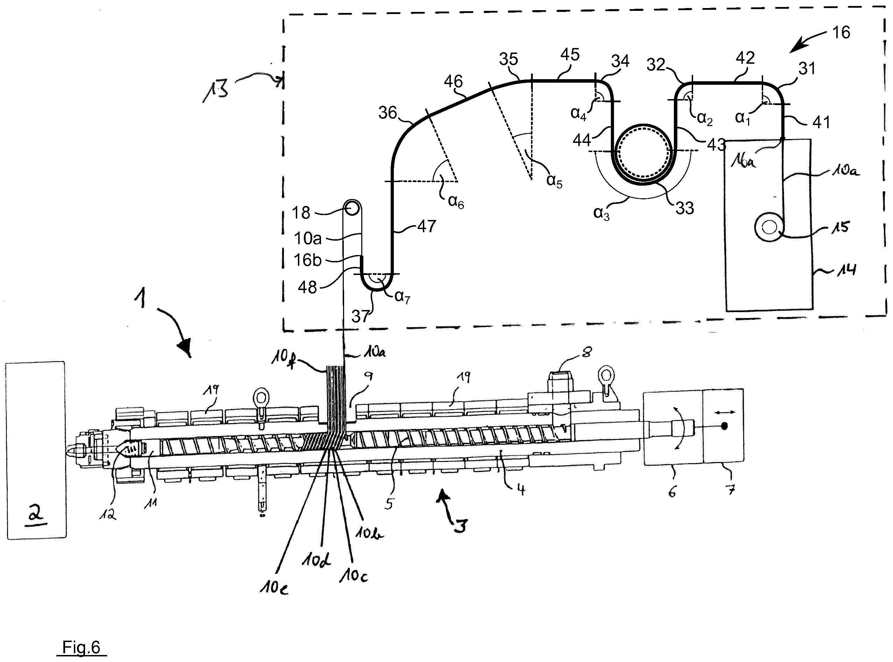

Die Figur 6 zeigt eine Ausführungsform, bei der ein Schlauch 16 derart im Raum verlegt ist, dass mehrere Kreissegmente mit einem jeweiligen Kreissegmentwinkel $\alpha$ und gerade Abschnitte vorliegen. Soweit das Faserbündel 10a in einem Kreissegment mit dem Kreissegmentwinkel $\alpha$ geführt ist, wird es mit einer dem jeweiligen Kreissegment-winkel $\alpha$ entsprechenden Faserbremskraft gemäß dem Euler-Eytelwein-Effekt beaufschlagt. In den geraden Abschnitten wird das Faserbündel 10a hingegen nicht mit einer Faserbremskraft gemäß dem Euler-Eytelwein-Effekt beaufschlagt.

In dem vorliegenden Beispiel der Figur 6 ist der Schlauch 16 derart verlegt, dass folgende Kreissegmente vorliegen:

| Bezugszeichen | Kreissegmentswinkel | Radius |
|---|---|---|
| 31 | $\alpha_1 = 90°$ | 0,3m |
| 32 | $\alpha_2 = 90°$ | 0,3m |
| 33 | $\alpha_3 = 180°$ | 0,4m |
| 34 | $\alpha_4 = 90°$ | 0,3m |
| 35 | $\alpha_5 = 30°$ | 1m |
| 36 | $\alpha_6 = 60^0$ | 0,8m |
| 37 | $\alpha_7 = 180°$ | 0,2m |

Das Kreissegment mit dem Bezugszeichen 33 ist vorliegend als Umschlingung eines imaginären oder realen Umschlingungsgegenstands 22 mit 1,5 Windungen ausgeführt. Die geraden Abschnitte ohne Faserbremskraft gemäß dem Euler-Eytelwein-Effekt sind mit den Bezugszeichen 41 bis 48 gekennzeichnet.

Im Unterschied zu dem Ausführungsbeispiel gemäß der Figur 1 ist die Umlenkwalze 17 vorliegend nicht erforderlich. Der letzte Abschnitt des Schlauchs wird von einem geraden Abschnitt 48 gebildet, der so ausgerichtet ist, dass der aus dem Schlauchende 16b austretende Faserstrang 10a mit einer halben Umschlingung um die Bremswalze 18 geführt werden kann.

Die Lage des Schlauchs 16 im Raum kann beliebig sein. Die Anzahl der Kreissegmente und deren Radien sowie die Anzahl der geraden Abschnitte können ebenfalls beliebig sein. Es kommt lediglich darauf an, dass eine gewünschte Faserbremskraft mittels des Euler-Eytelwein-Effekts erzielt wird. Diese hängt ausschließlich von der Summe der Kreissegmentswinkel ab, die zwischen der Eintrittsöffnung 16a und der Austrittsöffnung 16b des Schlauchs 16 vorliegen. In dem Ausführungsbeispiel der Figur 6 beträgt diese Summe der Kreissegmentswinkel 1080°, was in der Praxis eher nicht vorkommen dürfte. Die Figur 6 soll lediglich veranschaulichen, dass verschiedene Varianten und Anordnungen von Kreissegmenten denkbar sind, um eine Faserbremskraft gemäß dem Euler-Eytelwein-Effekt erzielen zu können.

Die Erfindung ist vorliegend am Ausführungsbeispiel einer Spritzgießmaschine näher beschrieben worden. Grundsätzlich könnte die erfindungsgemäße Einschnecken-Plastifiziereinheit aber auch in der Extrusion verwendet werden. In diesem Fall können der Linearantrieb 7 der Schnecke 5 sowie die Rückströmsperre 12 entfallen. Anstelle der Schließeinheit 2 mit einem Spritzgießwerkzeug können geeignete Formgebungswerkzeuge und weitere in der Extrusion übliche Einrichtungen vorgesehen werden.

**Bezugszeichenliste**

| | |
|---|---|
| 1 | Spritzgießmaschine |
| 2 | Schließeinheit |
| 3 | Einschnecken-Plastifiziereinheit |
| 4 | Zylinder |
| 5 | Schnecke |
| 6 | Drehantrieb |
| 7 | Linearantrieb |
| 8 | Erste Einfüllöffnung - Kunststoffmaterial |

(fortgesetzt)

| 9 | Zweite Einfüllöffnung - Fasermaterial |
|---|---|
| 10 | Faserstränge bzw. Rovings |
| 10a - 10f | Einzelne Faserstränge bzw. Rovings |
| 11 | Rückströmsperre |
| 12 | Mischteil |
| 13 | Faserzuführeinrichtung |
| 14 | Fasergatter |
| 15 | Faserspule |
| 15a - 15f | Faserspulen |
| 16 | Antistatikschlauch |
| 16a | Eintrittsöffnung |
| 16b | Au strittsöffn u ng |
| 17 | Umlenkwalze |
| 18 | Bremswalze |
| 19 | Heizelement |
| 20 | Venturidüse |
| 21 | Druckluftzufuhr |
| 22 | Imaginärer Umschlingungsgegenstand |
| 23 | Realer Umschlingungsgegenstand |
| 31 — 37 | als Kreissegment verlegte Schlauchabschnitte |
| 41 — 48 | gerade Schlauchabschnitte |
| K1, K2 | Bereiche mit Kreissegmenten |

**Patentansprüche**

1. Einschnecken-Plastifiziereinheit (3) zur Herstellung einer Kunststoffschmelze, welche mit Fasern aus einem oder mehreren Faserbündeln (10a, 10b, 10c, 10d, 10e, 10f) versetzt ist, mit einem Zylinder (4) und mit einer in dem Zylinder (4) drehbaren, vorzugsweise auch linearantreibbaren, Schnecke (5), wobei in dem Zylinder (4) eine erste Öffnung (8) als Einfüllöffnung für die Zufuhr eines aufzuschmelzenden Kunststoffmaterials vorgesehen ist, und wobei förderabseitig von der ersten Öffnung (8) in dem Zylinder (4) eine zweite Öffnung (9) als Einfüllöffnung für die Zufuhr von einem oder mehreren Faserbündeln (10a. 10b. 10c. 10d. 10e. 10f) vorgesehen ist, und mit einer Faserzuführeinrichtung (13), umfassend ein Fasergatter (14) mit einer oder mehreren Faserspulen (15, 15a, 15b, 15c, 15d, 15e, 15f), von denen Faserbündel (10a, 10b, 10c, 10d, 10e, 10f) abgezogen werden können,
**dadurch gekennzeichnet, dass**
die Faserzuführeinrichtung (13) mit einem oder mehreren Schläuchen (16) ausgestattet ist, durch welche von Faserspulen (15, 15a, 15b, 15c, 15d, 15e, 15f) abgezogene Faserbündel (10a, 10b, 10c, 10d, 10e, 10f) hindurchführbar oder hindurchgeführt sind, wobei für eines oder mehrere Faserbündel (10a, 10b, 10c, 10d, 10e, 10f) jeweils ein eigener Schlauch (16) vorgesehen ist, wobei ein oder mehrere Schläuche (16) derart verlegt sind, dass für diese Schläuche (16) ein oder mehrere Kreissegmente (31, 32, 33, 34, 35, 36, 37) mit einem jeweiligen Kreissegmentwinkel ($\alpha_1$, $\alpha_2$, $\alpha_3$, $\alpha_4$, $\alpha_5$, $\alpha_6$, $\alpha_7$) vorliegen, wobei diejenigen Faserbündel (10a, 10b, 10c, 10d, 10e, 10f), die in einem oder mehreren Kreissegmenten (31, 32, 33, 34, 35, 36, 37) mit dem jeweiligen Kreissegmentwinkel ($\alpha_1$, $\alpha_2$, $\alpha_3$, $\alpha_4$, $\alpha_5$, $\alpha_6$, $\alpha_7$) geführt sind, mit einer dem jeweiligen Kreissegmentwinkel ($\alpha_1$, $\alpha_2$, $\alpha_3$, $\alpha_4$, $\alpha_5$, $\alpha_6$, $\alpha_7$) entsprechenden Faserbremskraft gemäß dem Euler-Eytelwein-Effekt beaufschlagt sind und wobei für jeweils einen Schlauch (16) eine Gesamt-Faserbremskraft gemäß dem Euler-Eytelwein-Effekt entsprechend der Summe der Kreissegmentwinkel dieses Schlauchs (16) vorliegt.

**2.** Plastifiziereinheit nach Anspruch 1
**dadurch gekennzeichnet, dass**
bei einem oder mehreren der Schläuche (16) vorgesehen ist, dass mehrere Kreissegmente (31, 32, 33, ...) mit unterschiedlich großen Kreissegmentwinkeln ($\alpha_1$, $\alpha_2$, $\alpha_3$,...) vorliegen.

**3.** Plastifiziereinheit nach Anspruch 1 oder 2,
**dadurch gekennzeichnet, dass**
bei einem oder mehreren der Schläuche (16) gerade Abschnitte (41, 42, 43, 44, 45, 46, 47, 48) vorgesehen sind, in welchen die Faserbündel nicht mit einer Faserbremskraft gemäß dem Euler-Eytelwein-Effekt beaufschlagt sind.

**4.** Plastifiziereinheit nach einem der vorstehenden Ansprüche,
**dadurch gekennzeichnet, dass**
ein oder mehrere Schläuche (16) derart verlegt sind, dass mehrere Kreissegmente mit dem gleichen Radius r unmittelbar aufeinanderfolgend und sich aneinander anschließend vorliegen und eine Umschlingung (33) eines imaginären (22) oder eines realen (23) Umschlingungsgegenstandes mit einem vorgebbaren Umschlingungswinkel ($\beta$) gebildet wird, wobei der Umschlingungswinkel ($\beta$) der Summe der Kreissegmentwinkel ($\alpha_1$, $\alpha_2$, $\alpha_3$,...) entspricht, die diese Umschlingung bilden.

**5.** Plastifiziereinheit nach einem der vorstehenden Ansprüche,
**dadurch gekennzeichnet, dass**
für jedes der Faserbündel (10a, 10b, 10c, 10d, 10e, 10f) ein eigener Schlauch (16) vorgesehen ist.

**6.** Plastifiziereinheit nach einem der vorstehenden Ansprüche,
**dadurch gekennzeichnet, dass**
dass alle Schläuche (16) derart verlegt sind, dass für diese Schläuche (16) ein oder mehrere Kreissegmente (31, 32, 33, 34, 35, 36, 37) mit einem jeweiligen Kreissegmentwinkel ($\alpha_1$, $\alpha_2$, $\alpha_3$, $\alpha_4$, $\alpha_5$, $\alpha_6$, $\alpha_7$) vorliegen, wobei vorzugsweise für jeden der Schläuche (16) die gleichen Kreissegmente mit den gleichen Kreissegmentwinkeln gebildet sind.

**7.** Plastifziereinheit nach einem der vorstehenden Ansprüche,
**dadurch gekennzeichnet, dass**
für jeden Schlauch (16) jeweils eine Umschlingung eines imaginären (22) oder eines realen (23) Umschlingungsgegenstandes mit einem vorgebbaren Umschlingungswinkel ($\beta$) gebildet wird, wobei vorzugsweise für jeden der Schläuche (16) der gleiche Umschlingungswinkel ($\beta$) vorgesehen ist.

**8.** Plastifiziereinheit nach einem der vorstehenden Ansprüche
**dadurch gekennzeichnet, dass**
die Summe der Kreissegmentwinkel ($\alpha_1$, $\alpha_2$, $\alpha_3$, $\alpha_4$, $\alpha_5$, $\alpha_6$, $\alpha_7$) bzw. ein Umschlingungswinkel ($\beta$) im Bereich von 180° bis 720° liegt.

**9.** Plastifiziereinheit nach einem der vorstehenden Ansprüche,
**dadurch gekennzeichnet, dass**
bei den Kreissegmenten bzw. den Umschlingungen jeweils ein Radius im Bereich von 0,1m bis 1,0m vorliegt, vorzugsweise ein Radius im Bereich von 0,3m bis 0,6m.

**10.** Plastifiziereinheit nach einem der vorstehenden Ansprüche,
**dadurch gekennzeichnet, dass**
der Austrittsöffnung (16b) der Schläuche (16) nachgelagert eine von einem Motor angetriebene Bremswalze (18) vorgesehen ist, welche von Faserbündeln (10a, 10b, 10c, 10c, 10d, 10e) umlaufen bzw. umschlungen wird, wobei die Bremswalze vorzugsweise eine gummibeschichtete Oberfläche aufweist.

**11.** Plastifiziereinheit nach Anspruch 10,
**dadurch gekennzeichnet, dass**
der Umschlingungswinkel (p), mit dem die Bremswalze (18) von einem Faserbündel (10a, 10b, 10c, 10d, 10e, 10f) umlaufen bzw. umschlungen wird, im Bereich von 15° bis 270° liegt, vorzugsweise im Bereich von 120° bis 200°, und ganz besonders bevorzugt 180° beträgt.

**12.** Plastifiziereinheit nach Anspruch 10 oder 11,

**dadurch gekennzeichnet, dass**

zwischen der Austrittsöffnung (16b) und der Bremswalze (18) eine frei drehbar gelagerte Umlenkwalze (17) vorgesehen ist, welche vorzugsweise mit einem Winkel von 180° von Faserbündeln (10a, 10b, 10c, 10d, 10e, 10f) umlaufen wird.

13. Plastifiziereinheit nach einem der vorstehenden Ansprüche,
**dadurch gekennzeichnet, dass**
in dem Fasergatter (14) mehrere Faserspulen (15a, 15b, 15c, 15d, 15e, 15f) um eine Achse drehbar gelagert sind, wobei die Achse vorzugsweise horizontal oder vertikal ausgerichtet ist.

14. Plastifiziereinheit nach einem der vorstehenden Ansprüche,
**dadurch gekennzeichnet, dass**
an der Eintrittsöffnung (16a) von einem oder mehreren der Schläuche (16) eine Venturidüse (20) angeordnet ist.

15. Plastifiziereinheit nach einem der vorstehenden Ansprüche,
**dadurch gekennzeichnet, dass**
mehrere Faserbündel (10a, 10b, 10c, 10d, 10e, 10f) gemeinsam über eine einzige Bremswalze (18) und gegebenenfalls auch gemeinsam über eine einzige Umlenkwalze (17) umlaufen, wobei die Faserbündel (10a, 10b, 10c, 10d, 10e, 10f) in Achsrichtung der jeweiligen Walze gesehen in geeigneter Weise voneinander beabstandet sind.

16. Plastifiziereinheit nach einem der vorstehenden Ansprüche,
**dadurch gekennzeichnet, dass**
die auf ein Faserbündel einwirkende Faserbremskraft zu mindestens 50% durch den Euler-Eytelwein-Effekt und höchstens zu 50% durch eine Bremswalze bereitgestellt ist, wobei vorzugsweise mindestens 75% bis 85% an Faserbremskraft durch den Euler-Eytelwein-Effekt bereitgestellt ist.

17. Spritzgießmaschine (1) zur Herstellung von faserverstärkten Kunststoff-Formteilen, mit einer Schließeinheit (2) und einer Plastifiziereinheit (3) nach einem der vorstehenden Ansprüche, wobei ein Linearantrieb (7) für die Schnecke (5) vorgesehen ist, derart, dass die Schnecke (5) als Schubschnecke ausgebildet ist und zum Einspritzen von mit Fasern versetzter Kunststoff-Schmelze in ein Spritzgießwerkzeug vorgesehen ist.

18. Spritzgießmaschine (1) zur Herstellung von faserverstärkten Kunststoff-Formteilen, mit einer Schließeinheit (2) und einer Plastifiziereinheit (3) nach einem der Ansprüche 1 bis 16, und mit einem der Plastifiziereinheit (3) nachgeschalteten Kolben-Spritzaggregat zum Einspritzen von mit Fasern versetzter Kunststoff-Schmelze in ein Spritzgießwerkzeug.

**Claims**

1. A single screw plasticising unit (3) for producing a plastic melt, which is mixed with fibres from one or more fibre bundles (10a, 10b, 10c, 10d, 10e, 10f), with a cylinder (4) and with a screw (5) which is rotatable, preferably also linearly drivable, in the cylinder (4), wherein in the cylinder (4) a first opening (8) is provided as filling opening for the supply of a plastic material which is to be melted, and wherein, remote from the first opening (8) with respect to conveying, a second opening (9) is provided in the cylinder (4) as filling opening for the supply of one or more fibre bundles (10a, 10b, 10c, 10d, 10e, 10f), and with a fibre supply device (13), comprising a fibre creel (14) with one or more fibre spools (15, 15a, 15b, 15c, 15d, 15e, 15f) from which fibre bundles (10a, 10b, 10c, 10d, 10e, 10f) can be withdrawn,
**characterized in that**
the fibre supply device (13) is equipped with one or more hoses (16) through which fibre bundles (10a, 10b, 10c, 10d, 10e, 10f), withdrawn from fibre spools (15, 15a, 15b, 15c, 15d, 15e, 15f) are able to be directed or are directed, wherein for one or more fibre bundles (10a, 10b, 10c, 10d, 10e, 10f) respectively a separate hose (16) is provided, wherein one or more hoses (16) are laid such that for these hoses (16) one or more circular segments (31, 32, 33, 34, 35, 36, 37) with s respective circular segment angle ($\alpha_1$, $\alpha_2$, $\alpha_3$, $\alpha_4$, $\alpha_5$, $\alpha_6$, $\alpha_7$) are present, wherein the fibre bundles (10a, 10b, 10c, 10d, 10e, 10f), which are directed in one or more circular segments (31, 32, 33, 34, 35, 36, 37) with the respective circular segment angle ($\alpha_1$, $\alpha_2$, $\alpha_3$, $\alpha_4$, $\alpha_5$, $\alpha_6$, $\alpha_7$), are acted upon with a fibre braking force, corresponding to the respective circular segment angle ($\alpha_1$, $\alpha_2$, $\alpha_3$, $\alpha_4$, $\alpha_5$, $\alpha_6$, $\alpha_7$), according to the Euler-Eytelwein effect, and wherein for a hose (16) respectively a total fibre braking force according to the Euler-Eytelwein effect is present corresponding to the sum of the circular segment angles of this hose (16).

**2.** The plasticising unit according to Claim 1,
**characterized in that**
in the case of one or more of the hoses (16) provision is made that several circular segments (31, 32, 33, ...) having circular segment angles ($\alpha_1$, $\alpha_2$, $\alpha_3$, ...) of different sizes are present.

**3.** The plasticising unit according to Claim 1 or 2,
**characterized in that**
in the case of one or more of the hoses (16), straight portions (41, 42, 43, 44, 45, 46, 47, 48) are provided, in which the fibre bundles are not acted upon by a fibre braking force according to the Euler-Eytelwein effect.

**4.** The plasticising unit according to one of the preceding claims,
**characterized in that**
one or more hoses (16) are laid such that several circular segments with the same radius r are present immediately following one another and adjacent to one another, and a wrap (33) around an imaginary (22) or a real (23) wrap object with a predefinable wrap angle ($\beta$) is formed, wherein the wrap angle ($\beta$) corresponds to the sum of the circular segment angles ($\alpha_1$, $\alpha_2$, $\alpha_3$, ...) which form this wrap.

**5.** The plasticising unit according to one of the preceding claims,
**characterized in that**
for each of the fibre bundles (10a, 10b, 10c, 10d, 10e, 10f) a separate hose (16) is provided.

**6.** The plasticising unit according to one of the preceding claims,
**characterized in that**
all the hoses (16) are laid such that for these hoses (16) one or more circular segments (31, 32, 33, 34, 35, 36, 37) with a respective circular segment angle ($\alpha_1$, $\alpha_2$, $\alpha_3$, $\alpha_4$, $\alpha_5$, $\alpha_6$, $\alpha_7$) are present, wherein preferably for each of the hoses (16) the same circular segments are formed with the same circular segment angles.

**7.** The plasticising unit according to one of the preceding claims,
**characterized in that**
for each hose (16) respectively a wrap around an imaginary (22) or a real (23) wrap object with a predefinable wrap angle ($\beta$) is formed, wherein preferably for each of the hoses (16) the same wrap angle ($\beta$) is provided.

**8.** The plasticising unit according to one of the preceding claims,
**characterized in that**
the sum of the circular segment angles ($\alpha_1$, $\alpha_2$, $\alpha_3$, $\alpha_4$, $\alpha_5$, $\alpha_6$, $\alpha_7$) or respectively a wrap angle ($\beta$) lies in the range of 180° to 720°.

**9.** The plasticising unit according to one of the preceding claims,
**characterized in that**
in the case of the circular segments or respectively the wraps, respectively a radius in the range of 0.1m to 1.0m is present, preferably a radius in the range of 0.3m to 0.6m.

**10.** The plasticising unit according to one of the preceding claims,
**characterized in that**
downstream of the outlet opening (16b) of the hoses (16), a brake roller (18) is provided, driven by a motor, which brake roller is run around or respectively wrapped around by fibre bundles (10a, 10b, 10c, 10d, 10e, 10f), wherein the brake roller preferably has a rubber-coated surface.

**11.** The plasticising unit according to Claim 10,
**characterized in that**
the wrap angle ($\rho$) by which the brake roller (18) is run around or respectively wrapped by a fibre bundle (10a, 10b, 10c, 10d, 10e, 10f), lies in the range of 15° to 270°, preferably in the range of 120° to 200°, and most particularly preferably amounts to 180°.

**12.** The plasticising unit according to Claim 10 or 11,
**characterized in that**
between the outlet opening (16b) and the brake roller (18) a freely rotatably mounted deflection roller (17) is provided, which is preferably run around with an angle of 180° by fibre bundles (10a, 10b, 10c, 10d, 10e, 10f).

**13.** The plasticising unit according to one of the preceding claims,
**characterized in that**
in the fibre creel (14) several fibre spools (15a, 15b, 15c, 15d, 15e, 15f) are rotatably mounted about an axis, wherein the axis is preferably aligned horizontally or vertically.

**14.** The plasticising unit according to one of the preceding claims,
**characterized in that**
a venturi nozzle (20) is arranged at the inlet opening (16a) of one or more of the hoses (16).

**15.** The plasticising unit according to one of the preceding claims,
**characterized in that**
several fibre bundles (10a, 10b, 10c, 10d, 10e, 10f) run around jointly over a single brake roller (18) and if applicable also jointly over a single deflection roller (17), wherein the fibre bundles (10a, 10b, 10c, 10d, 10e, 10f) are spaced apart from one another in a suitable manner, viewed in axial direction of the respective roller.

**16.** The plasticising unit according to one of the preceding claims,
**characterized in that**
the fibre braking force acting on a fibre bundle is provided at at least 50% by the Euler-Eytelwein effect and at a maximum at 50% by a brake roller, wherein preferably at least 75% to 85% of the fibre braking force is provided by the Euler-Eytelwein effect.

**17.** An injection moulding machine (1) for producing fibre-reinforced plastic moulded parts, with a clamping unit (2) and with a plasticising unit (3) according to one of the preceding claims, wherein a linear drive (7) is provided for the screw (5), such that the screw (5) is formed as a reciprocating screw and is provided for the injecting of plastic melt, mixed with fibres, into an injection mould.

**18.** An injection moulding machine (1) for producing fibre-reinforced plastic moulded parts, with a clamping unit (2) and with a plasticising unit (3) according to one of Claims 1 to 16, and with a plunger injection unit, downstream of the plasticising unit (3), for the
injecting of plastic melt, mixed with fibres, into an injection mould.


**Revendications**

**1.** Unité de malaxage à vis simple (3) pour la fabrication d'une masse plastique fondue, laquelle est chargée de fibres d'un ou plusieurs faisceau(x) de fibres (10a, 10b, 10c, 10d, 10e, 10f), comprenant un cylindre (4) et une vis (5) rotative dans le cylindre (4), pouvant être également entraînée de façon linéaire, dans laquelle une première ouverture (8) est prévue dans le cylindre (4) en tant qu'ouverture de remplissage pour l'amenée d'une masse plastique à fondre, et dans lequel une seconde ouverture (9) est prévue à l'écart de transport de la première ouverture (8) dans le cylindre (4) en tant qu'ouverture de remplissage pour l'amenée d'un ou plusieurs faisceau(x) de fibres (10a, 10b, 10c, 10d, 10e, 10f), et comprenant un dispositif d'amenée de fibres (13), comprenant un treillis de fibres (14) avec une ou plusieurs bobine(s) de fibres (15, 15a, 15b 15c, 15d, 15e, 15f) desquelles des faisceaux de fibres (10a, 10b, 10c, 10d, 10e, 10f) peuvent être tirés,
**caractérisée en ce que**
le dispositif d'amenée de fibres (13) est doté d'un ou plusieurs flexible(s) (16) à travers lesquels les faisceaux de fibres (10a, 10b, 10c, 10d, 10e, 10f) tirés de bobines de fibres (15, 15a, 15b 15c, 15d, 15e, 15f) peuvent être passés ou sont passés, dans laquelle pour un ou plusieurs faisceau(x) de fibres (10a, 10b, 10c, 10d, 10e, 10f), au moins un propre flexible (16) est prévu, dans laquelle un ou plusieurs flexible(s) (16) sont posés de telle façon que pour ces flexibles (16), un ou plusieurs segment(s) circulaire (s) (31, 32, 33, 34, 35, 36, 37) avec un angle de segment circulaire ($\alpha_1$, $\alpha_2$, $\alpha_3$, $\alpha_4$, $\alpha_5$, $\alpha_6$, $\alpha_7$) respectif sont présents, dans laquelle les faisceaux de fibres (10a, 10b, 10c, 10d, 10e, 10f) qui sont dirigés dans un ou plusieurs segment(s) circulaire(s) (31, 32, 33, 34, 35, 36, 37) avec l'angle de segment circulaire ($\alpha_1$, $\alpha_2$, $\alpha_3$, $\alpha_4$, $\alpha_5$, $\alpha_6$, $\alpha_7$) respectif reçoivent une force de freinage de fibres correspondant à l'angle de segment circulaire ($\alpha_1$, $\alpha_2$, $\alpha_3$, $\alpha_4$, $\alpha_5$, $\alpha_6$, $\alpha_7$) respectif selon l'effet de Euler-Eytelwein et dans laquelle pour respectivement un flexible (16), une force de freinage de fibres générale est présente selon l'effet de Euler-Eytelwein conformément à la somme des angles de segment circulaire de ce flexible (16).

**2.** Unité de malaxage selon la revendication 1,
**caractérisée en ce que**

pour un ou plusieurs des flexibles (16), il est prévu que plusieurs segments circulaires (31, 32, 33, ...) aient des angles de segment circulaire ($\alpha_1$, $\alpha_2$, $\alpha_3$, ...) de différente dimension.

3. Unité de malaxage selon la revendication 1 ou 2,
   **caractérisée en ce que**
   des tronçons droits (41, 42, 43, 44, 45, 46, 47, 48) sont prévus pour un ou plusieurs flexible(s) (16), dans lesquels les faisceaux de fibres ne reçoivent pas une force de freinage de fibres selon l'effet de Euler-Eytelwein.

4. Unité de malaxage selon l'une des revendications précédentes,
   **caractérisée en ce que**
   un ou plusieurs flexible(s) (16) sont ainsi posés que plusieurs segments circulaires avec le même rayon r se suivent directement et se raccordent l'un à l'autre, et un enroulement (33) d'un objet d'enroulement imaginaire (22) ou réel (23) est formé avec un angle d'enroulement ($\beta$) pouvant être prédéfini, dans laquelle l'angle d'enroulement ($\beta$) correspond à la somme des angles de segment circulaire ($\alpha_1$, $\alpha_2$, $\alpha_3$, ...) qui forment cet enroulement.

5. Unité de malaxage selon l'une des revendications précédentes,
   **caractérisée en ce que**
   pour chacun des faisceaux de fibres (10a, 10b, 10c, 10d, 10e, 10f), un propre flexible (16) est prévu.

6. Unité de malaxage selon l'une des revendications précédentes,
   **caractérisée en ce que**
   tous les flexibles (16) sont ainsi posés que pour ces flexibles (16), un ou plusieurs segments circulaires (31, 32, 33, 34, 35, 36, 37) avec un angle de segment circulaire ($\alpha_1$, $\alpha_2$, $\alpha_3$, $\alpha_4$, $\alpha_5$, $\alpha_6$, $\alpha_7$) respectif sont présents, dans laquelle de préférence, pour chacun des flexibles (16), les mêmes segments circulaires ayant les mêmes angles de segment circulaire sont formés.

7. Unité de malaxage selon l'une des revendications précédentes,
   **caractérisée en ce que**
   pour chaque flexible (16), respectivement un enroulement d'un objet d'enroulement imaginaire (22) ou réel (23) est formé avec un angle d'enroulement ($\beta$) pouvant être prédéfini, dans laquelle de préférence, pour chacun des flexibles (16), le même angle d'enroulement ($\beta$) est prévu.

8. Unité de malaxage selon l'une des revendications précédentes,
   **caractérisée en ce que**
   la somme des angles de segment circulaire ($\alpha_1$, $\alpha_2$, $\alpha_3$, $\alpha_4$, $\alpha_5$, $\alpha_6$, $\alpha_7$), respectivement un angle d'enroulement ($\beta$), est situé(e) dans la plage de 180° à 720°.

9. Unité de malaxage selon l'une des revendications précédentes,
   **caractérisée en ce que**
   les segments circulaires, respectivement les enroulements, ont respectivement un rayon dans la plage de 0,1 m à 1 m, de préférence un rayon situé dans la plage de 0,3 m à 0,6 m.

10. Unité de malaxage selon l'une des revendications précédentes,
    **caractérisée en ce que**
    un rouleau de freinage (18) placé après l'ouverture de sortie (16b) des flexibles (16) et entraîné par un moteur est présent, lequel est entouré, respectivement enroulé par des faisceaux de fibres (10a, 10b, 10c, 10d, 10e, 10f), dans laquelle le rouleau de freinage présente de préférence une surface revêtue de caoutchouc.

11. Unité de malaxage selon la revendication 10,
    **caractérisée en ce que**
    l'angle d'enroulement ($\rho$) avec lequel le rouleau de freinage (18) est entouré, respectivement enroulé par des faisceaux de fibres (10a, 10b, 10c, 10d, 10e, 10f), est situé dans la plage de 15° à 270°, de préférence dans la plage de 120° à 200°, et tout particulièrement de préférence de 180°.

12. Unité de malaxage selon la revendication 10 ou 11,
    **caractérisée en ce que**
    un rouleau de renvoi (17) disposé en rotation libre est prévu entre l'ouverture de sortie (16b) et le rouleau de freinage (18), lequel est entouré de préférence par des faisceaux de fibres (10a, 10b, 10c, 10d, 10e, 10f), avec un angle de 180°.

13. Unité de malaxage selon l'une des revendications précédentes,
 **caractérisée en ce que**
 plusieurs bobines de fibres (15a, 15b 15c, 15d, 15e, 15f) sont disposées rotatives sur un axe dans le treillis de fibres (14), dans lequel l'axe est dirigé de préférence horizontalement ou verticalement.

14. Unité de malaxage selon l'une des revendications précédentes,
 **caractérisée en ce que**
 une buse venturi (20) est disposée sur l'ouverture d'entrée (16a) d'un ou plusieurs des flexible(s) (16).

15. Unité de malaxage selon l'une des revendications précédentes,
 **caractérisée en ce que**
 plusieurs faisceaux de fibres (10a, 10b, 10c, 10d, 10e, 10f) tournent conjointement sur un seul rouleau de freinage (18), et le cas échéant également conjointement sur un seul rouleau de renvoi (17), dans laquelle les faisceaux de fibres (10a, 10b, 10c, 10d, 10e, 10f) sont distants l'un de l'autre de manière appropriée vu dans le sens axial du rouleau respectif.

16. Unité de malaxage selon l'une des revendications précédentes,
 **caractérisée en ce que**
 la force de freinage de fibres agissant sur un faisceau de fibres est fournie au moins à 50 % par l'effet de Euler-Eytelwein et au plus à 50 % par un rouleau de freinage, dans laquelle de préférence au moins 75 % à 85 % de force de freinage de fibres est fournie par l'effet de Euler-Eytelwein.

17. Machine de moulage par injection (1) pour fabriquer des pièces moulées en plastique renforcé par fibres, comprenant une unité de fermeture (2) et une unité de malaxage (3) selon l'une des revendications précédentes, dans laquelle un entraînement linéaire (7) est prévu pour la vis (5) de telle sorte que la vis (5) est formée en tant que vis-piston et est prévue pour injecter de la masse plastique fondue chargée en fibres dans un outil de moulage par injection.

18. Machine de moulage par injection (1) pour fabriquer des pièces moulées en plastique renforcé par fibres, comprenant une unité de fermeture (2) et une unité de malaxage (3) selon l'une des revendications 1 à 16, et comprenant un groupe d'injection à piston monté en aval de l'unité de malaxage (3) pour injecter de la masse plastique fondue chargée en fibres dans un outil de moulage par injection.

Fig. 1

Fig. 2

Fig. 4

Fig. 3

15

Fig. 5

Fig.6

EP 3 697 590 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011066917 A2